# EUROPÄISCHE PATENTSCHRIFT

(11) **EP 3 406 384 B1**
(45) Veröffentlichungstag und Bekanntmachung des Hinweises auf die Patenterteilung: **29.07.2020**
(21) Anmeldenummer: 18171752.1
(22) Anmeldetag: 11.05.2018
(51) Int. Cl.: B23K 9/12

(54) **VERFAHREN ZUR POSITIONSÜBERPRÜFUNG EINES SCHWEISSROBOTERS**
METHOD FOR VERIFICATION OF THE POSITION OF A WELDING ROBOT
PROCÉDÉ DE VÉRIFICATION DE LA POSITION D'UN ROBOT DE SOUDAGE

(30) Priorität: 23.05.2017 DE 102017111276
(43) Veröffentlichungstag der Anmeldung: 28.11.2018
(73) Patentinhaber: Eberspächer Exhaust Technology Wilsdruff GmbH, 01723 Wilsdruff (DE)
(72) Erfinder: Hortian, Jens, 01723 Wilsdruff (DE); Ogriseck, Michael, 01723 Grumbach (DE)
(74) Vertreter: Ruttensperger Lachnit Trossin Gomoll

(56) Entgegenhaltungen:
- WO-A1-01/34336
- WO-A1-2012/094689
- WO-A1-2017/077692
- DE-C2- 3 345 615

## Beschreibung

Die vorliegende Erfindung betrifft ein Verfahren zur Funktionsüberprüfung eines Schweißroboters.

In der Automobilindustrie und der Automobilzuliefererindustrie werden in weitem Umfang Schweißroboter eingesetzt, um Schweißvorgänge mit hoher Präzision automatisiert durchzuführen. Dabei ist es für eine hohe Qualität der so hergestellten Schweißverbindungen bedeutend, dass bei der Durchführung eines Schweißvorgangs ein beispielsweise an einem Roboterarm getragener Schweißkopf mit dem im Bereich des Schweißkopfs aus einem Stromkontaktrohr herausgeführten Schweißdraht in einer für einen jeweiligen Schweißvorgang vorgegebenen Positionierung ist bzw. exakt entlang eines für einen Schweißvorgang vorgegebenen Bewegungspfads geführt wird.

Aus der WO 2017/077692 A1 ist es bekannt, bei einem Schweißroboter vor Durchführung eines Schweißvorgangs ein Lernprogramm ablaufen zu lassen. Das Lernprogramm enthält ein Positionserfassungsprogramm und ein Schweißprogramm. Mit dem Positionserfassungsprogramm wird die tatsächliche Position eines Werkstücks bzw. eine Positionsverschiebung eines Werkstücks durch den Kontakt eines Schweißdraht mit dem Werkstück identifiziert.

Die DE 33 45 615 C2 offenbart ein Überprüfungssystem für einen Schweißroboter, mit welchem eine korrekte Positionierung eines Schweißdrahts bezüglich eines Arbeitsarmes eines Schweißroboters ermittelt werden kann. Dazu wird der Arbeitsarm des Schweißroboters derart manipuliert, dass der aus dem letzten Glied des Arbeitsarmes hervorstehende Abschnitt des Schweißdrahts in einen an einer Prüfelektrode vorgesehenen Prüfschlitz eingeführt wird. Um dabei ein Einführen des Schweißdrahtes in den Prüfschlitz sicherzustellen, kann dem Prüfschlitz ein Fangtrichter vorgeschaltet werden.

Aus der WO 2012/094689 A1 ist ein Lernverfahren für einen Schweißroboter bekannt, bei welchem vor Durchführung eines Schweißvorgangs der Schweißbrenner mit dem aus diesem hervorstehenden Schweißdraht grob über einem Werkstück positioniert wird. Der Schweißbrenner wird dann manuell derart horizontal und/oder vertikal bewegt, dass der aus dem Schweißbrenner hervorstehende Schweißdraht in eine gewünschte Position bezüglich des Werkstücks gebracht wird. Ist diese erreicht, kann die dabei vorhandene Position des Schweißbrenner gespeichert und sofort darauf ein Schweißprozess gestartet werden.

Es ist die Aufgabe der vorliegenden Erfindung, ein Verfahren zur Funktionsüberprüfung eines Schweißroboters vorzusehen, mit welchem eine korrekte Positionierung eines Schweißkopfs des Schweißroboters überprüft bzw. sichergestellt werden kann.

Erfindungsgemäß wird diese Aufgabe gelöst durch ein Verfahren zur Funktionsüberprüfung eines Schweißroboters, umfassend die Maßnahmen:
a) Durchführen einer Funktionsüberprüfungs-Bewegung eines Schweißkopfes eines Schweißroboters durch Durchführung einer Ansteuerung des Schweißroboters, welche das Bewegen des Schweißkopfes n eine Funktionsüberprüfungs-Referenzposition erreichen soll, wobei bei in der in der Funktionsprüfungs-Referenzposition positioniertem Schweißkopf der aus dem Schweißkopf herausgeführte Schweißdraht einen Referenz-Kontaktbereich des Funktionsüberprüfungs-Kontaktelements berührt,
b) nach durchgeführter Funktionsüberprüfungs-Bewegung, Anlegen einer Funktionsüberprüfungs-Spannung zwischen dem aus dem Schweißkopf herausgeführten Schweißdraht und dem Funktionsüberprüfungs-Kontaktelement,
c) Erfassen einer zwischen dem aus dem Schweißkopf herausgeführten Schweißdraht und dem Funktionsüberprüfungs-Kontaktelement aufgebauten Potenzialdifferenz oder/und eines Stromflusses zwischen dem aus dem Schweißkopf herausgeführten Schweißdraht und dem Funktionsüberprüfungs-Kontaktelement,
d) beruhend auf der bei der Maßnahme c) erfassten Potenzialdifferenz oder/und dem bei der Maßnahme c) erfassten Stromfluss, Bestimmen, ob der Schweißkopf nach durchgeführter Ansteuerung des Schweißroboters zum Durchführen der Funktionsüberprüfungs-Bewegung in der Funktionsüberprüfungs-Referenzposition ist.

Mit dem erfindungsgemäßen Verfahren kann mit technisch einfachen Mitteln beispielsweise am Beginn einer Arbeitsschicht festgestellt werden, ob dann, wenn der Roboter so angesteuert bzw. betrieben wird, dass dessen Schweißkopf eine definiert vorgegebene Position, nämlich die Funktionsüberprüfung Referenzposition, erreicht bzw. erreichen soll, am Ende dieses Bewegungsvorgangs diese definiert vorgegebene Position erreicht ist oder nicht. Wurde die Position erreicht, so kann der Arbeitsbetrieb des Schweißroboters aufgenommen bzw. fortgesetzt werden. Wurde die Position nicht erreicht, so deutet dies auf einen Fehler im Bewegungsablauf des Schweißroboters hin, so dass zum Verhindern eines nachfolgend fehlerhaft durchgeführten Schweißbetriebs beispielsweise die Aufnahme des Arbeitsbetriebs oder die Fortführung des Arbeitsbetriebs unterbunden werden kann.

Da erfindungsgemäß vorgesehen ist, dass bei in der Funktionsprüfungs-Referenzposition positioniertem Schweißkopf der aus dem Schweißkopf herausgeführte Schweißdraht einen Referenz-Kontaktbereich des Funktionsüberprüfungs-Kontaktelements berührt, ist gewährleistet, dass zwischen dem Schweißkopf bzw. dem daraus herausgeführten Schweißdraht und dem Funktionsüberprüfungs-Kontaktelement bei korrekt positionierten Schweißkopf eine elektrisch leitende Verbindung hergestellt ist.

Um eine klare Differenzierung einer korrekten Positionierung von einer nicht korrekten Positionierung zu gewährleisten, wird vorgeschlagen, dass dann, wenn die bei der Maßnahme c) erfasste Potenzialdifferenz unter einer vorbestimmten Potenzialdifferenz-Schwelle liegt, oder/und wenn der bei der Maßnahme c) erfasste Stromfluss über einer vorbestimmten Stromfluss-Schwelle liegt, bei der Maßnahme b) bestimmt wird, dass der Schweißkopf in der Funktionsüberprüfungs-Referenzposition ist, bzw. dass dann, wenn die bei der Maßnahme c) erfasste Potenzialdifferenz über einer vorbestimmten Potenzialdifferenz-Schwelle liegt, oder/und wenn der bei der Maßnahme c) erfasste Stromfluss unter einer vorbestimmten Stromfluss-Schwelle liegt, bei der Maßnahme d) bestimmt wird, dass der Schweißkopf nicht in der Funktionsüberprüfungs-Referenzposition ist.

Um nach Durchführung der Funktionsüberprüfung zu gewährleisten, dass auch für andere Systembereiche das Ergebnis der Funktionsüberprüfung erkennbar wird, beispielsweise um den Betrieb anderer Schweißroboter oder andere Arbeitsstationen auf das Ergebnis der Funktionsüberprüfung abstimmen zu können, wird vorgeschlagen, dass dann, wenn bei der Maßnahme d) bestimmt wird, dass der Schweißkopf in der Funktionsüberprüfungs-Referenzposition ist, eine Betriebsfreigabe-Meldung erzeugt wird, und dass dann, wenn bei der Maßnahme d) bestimmt wird, dass der Schweißkopf nicht in der Funktionsüberprüfungs-Referenzposition ist, eine Fehler-Meldung erzeugt wird.

Die Funktionsüberprüfung kann beispielsweise vor dem Beginn eines Arbeitsbetriebs oder/und nach einer vorbestimmten Zeitdauer in einem Arbeitsbetrieb eines Schweißroboters durchgeführt werden. Wenn bei der Maßnahme d) bestimmt wird, dass der Schweißkopf nicht in der Funktionsüberprüfungs-Referenzposition ist, kann ein Starten des Arbeitsbetriebs oder eine Fortführung des Arbeitsbetriebs unterbunden werden.

Die vorliegende Erfindung wird nachfolgend mit Bezug auf die beiliegenden Figuren detailliert beschrieben. Es zeigt:
- Fig. 1: in prinzipieller Darstellung einen während einer Funktionsüberprüfung korrekt positionierten Schweißkopf eines Schweißroboters;
- Fig. 2: den während einer Funktionsüberprüfung nicht korrekt positionierten Schweißkopf.

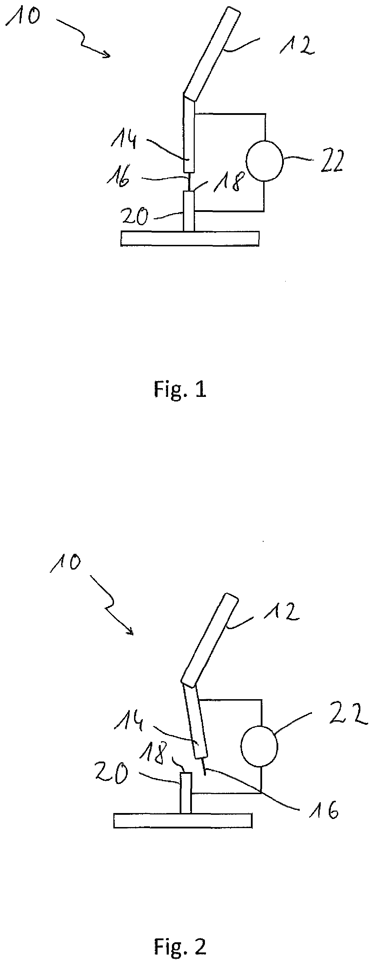

In Fig. 1 ist ein zum Erläutern der erfindungsgemäßen Vorgehensweise prinzipiell dargestellter Schweißroboter allgemein mit 10 bezeichnet. Ein Roboterarm 12. Schweißroboters 10 trägt einen allgemein mit 14 bezeichneten Schweißkopf. Aus einem in dem Schweißkopf 14 auch vorgesehenen Stromführungsrohr ist ein Schweißdraht 16 herausgeführt.

Der Roboterarm 12 des Schweißroboters 10 ist in Fig. 1 in einer Funktionsüberprüfungs-Referenzposition korrekt positioniert dargestellt. Bei derart positioniertem Roboterarm 12 berührt der aus dem Schweißkopf 14 herausgeführte Schweißdraht 16 einen Referenz-Kontaktbereich 18 eines Funktionsüberprüfungs-Kontaktelements 20. Vermittels einer allgemeinen 22 bezeichneten Funktionsüberprüfungs-Spannungsanordnung wird eine elektrische Spannung zwischen dem Schweißkopf 14 bzw. dem aus diesem herausgeführten Schweißdraht 16 und dem Funktionsüberprüfungs-Kontaktelement 20 angelegt. Die zwischen dem Schweißkopf 14 bzw. Schweißdraht 16 einerseits und dem Funktionsüberprüfungs-Kontaktelement 18 andererseits aufgebaute Potenzialdifferenz kann, durch die Funktionsüberprüfungs-Spannungsanordnung 22 erfasst werden.

Bei in der Funktionsüberprüfungs-Referenzposition korrekt positioniertem Schweißkopf 14 bzw. Schweißdraht 16 wird sich aufgrund des im Wesentlichen widerstandsfreien elektrischen Kontakts zwischen dem Schweißdraht 16 und dem Funktionsüberprüfungs-Kontaktelement 20 im Wesentlichen keine bzw. nur eine vergleichsweise geringe und somit unter einer Potenzialdifferenz-Schwelle liegende Potenzialdifferenz aufbauen, bzw. wird sich über den zwischen dem Schweißdraht 16 und dem Referenz-Kontaktbereich 18 aufgebauten elektrisch leitenden Kontakt ein über einer Stromfluss-Schwelle liegender Stromfluss einstellen.

Ist dies der Fall, so kann erkannt werden, dass die Ansteuerung bzw. der Betrieb des Schweißroboters 10 derart, dass dessen Roboterarm 12 mit dem daran vorgesehenen Schweißkopf 14 sich in eine definierte Position bewegt, erfolgreich durchgeführt wurde, was darauf hindeutet, dass der Schweißroboter 10 korrekt betrieben werden kann und somit für einen nachfolgend durchzuführenden Arbeitsbetrieb eingesetzt werden kann oder der zur Durchführung der Funktionsüberprüfung unterbrochene Arbeitsbetrieb fortgesetzt werden kann.

Die Fig. 2 zeigt einen Zustand, in welchem die zur Durchführung der Funktionsüberprüfung ausgelöste Bewegung des Roboterarms 12 bzw. des daran vorgesehenen Schweißkopfes 14 in die Funktionsüberprüfungs-Referenzposition nicht korrekt abgelaufen ist bzw. am Ende dieser Bewegung der Roboterarm 12 und somit auch der Schweißkopf 14 nicht korrekt in der Funktionsüberprüfungs-Referenzposition positioniert sind. Nach dieser fehlerhaft abgelaufenen Bewegung ist der Schweißdraht 16 nicht in Kontakt mit dem Referenz-Kontaktbereich 18 des Funktionsüberprüfungs-Kontaktelements 20. In diesem Zustand entspricht die zwischen dem Schweißkopf 14 bzw. dem Schweißdraht 16 und dem Funktionsüberprüfungs-Kontaktelement 20 aufgebaute Potenzialdifferenz im Wesentlichen der dazwischen angelegten elektrischen Spannung. Ein Stromfluss zwischen dem Schweißdraht 16 und dem Funktionsüberprüfungs-Kontaktelement 20 findet nicht statt. Somit liegt die aufgebaute Potenzialdifferenz über der zugeordneten Potenzialdifferenz-Schwelle, während der Stromfluss unter der zugeordneten Stromfluss-Schwelle liegt.

Während dann, wenn erkannt wird, dass der Schweißkopf 14 korrekt positioniert ist, eine Betriebsfreigabe-Meldung erzeugt werden kann, um den Betrieb des Schweißroboters 10 aufzunehmen oder fortzusetzen und auch anderen mit diesem Schweißroboter 10 zusammenwirkenden Systemen anzuzeigen, dass nachfolgend der zu erwartende Betrieb durchgeführt wird, kann dann, wenn eine korrekte Positionierung bei der Funktionsüberprüfung nicht erkannt wird, eine Fehler-Meldung erzeugt werden. Das Erzeugen der Fehler-Meldung kann zur Folge haben, dass der Schweißroboter 10 nicht in Betrieb genommen wird bzw. der für die Funktionsüberprüfung unterbrochene Betrieb nicht fortgesetzt wird, um zunächst eine Fehleranalyse durchzuführen und festzustellen, warum der Schweißkopf 14 nicht in der vorgegebenen Funktionsüberprüfungs-Referenzposition positioniert wurde. Erst dann, wenn dieser Fehler behoben ist bzw. wenn eine erneut durchgeführte Funktionsüberprüfung zu einer korrekten Positionierung des Schweißkopfs 14 geführt hat, kann der Schweißroboter 10 für den Arbeitsbetrieb freigegeben werden.

Die vorliegende Erfindung erlaubt es, mit technisch einfachen Mitteln festzustellen, ob ein Schweißroboter dazu in der Lage ist, die vorgegebenen Bewegungen korrekt durchzuführen, so dass für einen nachfolgenden Arbeitsbetrieb gewährleistet werden kann, dass auch während dieses Betriebs der Roboterarm bzw. der daran vorgesehene Schweißkopf korrekt positioniert bzw. bewegt werden. Diese Funktionsüberprüfung kann beispielsweise vor Beginn einer Arbeitsschicht durchgeführt werden oder nach einer vorbestimmten Betriebsdauer von beispielsweise acht Stunden vorgenommen werden. Insbesondere ist es möglich, mit dieser Vorgehensweise mehrere Schweißroboter gleichzeitig zu überprüfen.

Es ist abschließend darauf hinzuweisen, dass diese Vorgehensweise auch bei anders aufgebauten Schweißrobotern eingesetzt werden kann. So kann beispielsweise der Schweißkopf zangenartig ausgebildet sein und Punktschweißelektroden aufweisen, welche die zu verschweißenden Komponenten zangenartig zwischen sich einspannen. Bei Durchführung der Funktionsüberprüfung kann ein derartig zangenartig ausgebildeter Schweißkopf so bewegt werden, dass bei korrekter Positionierung ein Funktionsüberprüfungs-Kontaktelement zwischen den am Schweißkopf getragenen Punktschweißelektroden eingespannt und damit in elektrisch leitender Verbindung ist.

## Patentansprüche

1. Verfahren zur Funktionsüberprüfung eines Schweißroboters, umfassend die Maßnahmen:
a) Durchführen einer Funktionsüberprüfungs-Bewegung eines Schweißkopfes (14) eines Schweißroboters (10) durch Durchführung einer Ansteuerung des Schweißroboters (10), welche das Bewegen des Schweißkopfes (14) in eine Funktionsüberprüfungs-Referenzposition erreichen soll, wobei bei in der Funktionsüberprüfungs-Referenzposition positioniertem Schweißkopf (14) ein aus dem Schweißkopf (14) herausgeführter Schweißdraht (16) einen Referenz-Kontaktbereich (18) eines Funktionsüberprüfungs-Kontaktelements (20) berührt,
b) nach durchgeführter Funktionsüberprüfungs-Bewegung, Anlegen einer Funktionsüberprüfungs-Spannung zwischen dem aus dem Schweißkopf (14) herausgeführten Schweißdraht (16) und dem Funktionsüberprüfungs-Kontaktelement (20),
c) Erfassen einer zwischen dem aus dem Schweißkopf (14) herausgeführten Schweißdraht (16) und dem Funktionsüberprüfungs-Kontaktelement (20) aufgebauten Potenzialdifferenz oder/und eines Stromflusses zwischen dem aus dem Schweißkopf (14) herausgeführten Schweißdraht (16) und dem Funktionsüberprüfungs-Kontaktelement (20),
d) beruhend auf der bei der Maßnahme c) erfassten Potenzialdifferenz oder/und dem bei der Maßnahme c) erfassten Stromfluss, Bestimmen, ob der Schweißkopf (14) nach durchgeführter Ansteuerung des Schweißroboters (10) zum Durchführen der Funktionsüberprüfungs-Bewegung in der Funktionsüberprüfungs-Referenzposition ist.

2. Verfahren nach Anspruch 1, **dadurch gekennzeichnet, dass** dann, wenn die bei der Maßnahme c) erfasste Potenzialdifferenz unter einer vorbestimmten Potenzialdifferenz-Schwelle liegt, oder/und wenn der bei der Maßnahme c) erfasste Stromfluss über einer vorbestimmten Stromfluss-Schwelle liegt, bei der Maßnahme b) bestimmt wird, dass der Schweißkopf (14) in der Funktionsüberprüfungs-Referenzposition ist.

3. Verfahren nach einem der vorangehenden Ansprüche, **dadurch gekennzeichnet, dass** dann, wenn die bei der Maßnahme c) erfasste Potenzialdifferenz über einer vorbestimmten Potenzialdifferenz-Schwelle liegt, oder/und wenn der bei der Maßnahme c) erfasste Stromfluss unter einer vorbestimmten Stromfluss-Schwelle liegt, bei der Maßnahme d) bestimmt wird, dass der Schweißkopf (14) nicht in der Funktionsüberprüfungs-Referenzposition ist.

4. Verfahren nach einem der vorangehenden Ansprüche, **dadurch gekennzeichnet, dass** dann, wenn bei der Maßnahme d) bestimmt wird, dass der Schweißkopf (14) in der Funktionsüberprüfungs-Referenzposition ist, eine Betriebsfreigabe-Meldung erzeugt wird, und dass dann, wenn bei der Maßnahme d) bestimmt wird, dass der Schweißkopf (14) nicht in der Funktionsüberprüfungs-Referenzposition ist, eine Fehler-Meldung erzeugt wird.

5. Verfahren nach einem der vorangehenden Ansprüche, **dadurch gekennzeichnet, dass** die Funktionsüberprüfung vor dem Beginn eines Arbeitsbetriebs oder/und nach einer vorbestimmten Zeitdauer in einem Arbeitsbetrieb eines Schweißroboters (10) durchgeführt wird, und dass dann, wenn bei der Maßnahme d) bestimmt wird, dass der Schweißkopf (14) nicht in der Funktionsüberprüfungs-Referenzposition ist, ein Starten des Arbeitsbetriebs oder eine Fortführung des Arbeitsbetriebs unterbunden wird.

## Claims

1. Method for the function testing of a welding robot, comprising the following measures:
a) performing a function testing movement of a welding head (14) of a welding robot (10) by performing a control of the welding robot (10) which is to achieve the movement of the welding head (14) into a function testing reference position, in which, with the welding head (14) positioned in the function testing reference position, a welding wire (16) led out of the welding head (14) touches a reference contact region (18) of a function testing contact element (20),
b) after the function testing movement has been carried out, applying a function testing voltage between the welding wire (16) led out of the welding head (14) and the function testing contact element (20),
c) detecting a potential difference built up between the welding wire (16) led out of the welding head (14) and the function testing contact element (20) and/or a current flow between the welding wire (16) led out of the welding head (14) and the function testing contact element (20),
d) based on the potential difference detected in measure c) or/and the current flow detected in measure c), determining whether the welding head (14) is in the function testing reference position after performing control of the welding robot (10) to perform the function testing movement.

2. Method according to claim 1, **characterized in that** when the potential difference detected in measure c) is below a predetermined potential difference threshold and/or when the current flow detected in measure c) is above a predetermined current flow threshold, it is determined in measure b) that the welding head (14) is in the function testing reference position.

3. Method according to any one of the preceding claims, **characterized in that** when the potential difference detected in measure c) is above a predetermined potential difference threshold and/or when the current flow detected in measure c) is below a predetermined current flow threshold, it is determined in measure d) that the welding head (14) is not in the function testing reference position.

4. Method according to any one of the preceding claims, **characterized in that** when it is determined in measure d) that the welding head (14) is in the function testing reference position, an operation enable message is generated, and when it is determined in measure d) that the welding head (14) is not in the function testing reference position, an error message is generated.

5. Method according to any one of the preceding claims, **characterized in that** the function testing is carried out before the start of an operating mode and/or after a predetermined period of time in an operating mode of a welding robot (10), and **in that**, when it is determined in measure d) that the welding head (14) is not in the function testing reference position, starting of the operating mode or continuation of the operating mode is prevented.

## Revendications

1. Procédé pour un contrôle du fonctionnement d'un robot de soudage, comprenant les mesures suivantes :
a) effectuer un mouvement de contrôle du fonctionnement d'une tête de soudage (14) d'un robot de soudage (10) en effectuant une commande du robot de soudage (10) qui doit réaliser le mouvement de la tête de soudage (14) dans une position de référence de contrôle du fonctionnement, dans lequel, lorsque la tête de soudage (14) est positionnée dans la position de référence de contrôle du fonctionnement, un fil de soudage (16) sortant de la tête de soudage (14) touche une zone de contact de référence (18) d'un élément de contact de contrôle du fonctionnement (20),
b) après l'exécution du mouvement de contrôle du fonctionnement, application d'une tension de contrôle du fonctionnement entre le fil de soudage (16) sortant de la tête de soudage (14) et l'élément de contact de contrôle du fonctionnement (20),
c) détecter une différence de potentiel entre le fil de soudage (16) sortant de la tête de soudage (14) et l'élément de contact de contrôle du fonctionnement (20) et/ou un flux de courant entre le fil de soudage (16) sortant de la tête de soudage (14) et l'élément de contact de contrôle du fonctionnement (20),
d) sur la base de la différence de potentiel détectée dans la mesure c) et/ou du flux de courant détecté dans la mesure c), déterminer lorsque la tête de soudage (14) se trouve dans la position de référence de contrôle du fonctionnement après avoir commandé le robot de soudage (10) pour effectuer le mouvement de contrôle du fonctionnement.

2. Procédé selon la revendication 1, **caractérisé en ce que** lorsque la différence de potentiel détectée dans la mesure c) est inférieure à un seuil de différence de potentiel prédéterminé et/ou lorsque le flux de courant détecté dans la mesure c) est supérieur à un seuil de flux de courant prédéterminé, il est déterminé dans la mesure b) que la tête de soudage (14) se trouve dans la position de référence de contrôle du fonctionnement.

3. Procédé selon l'une des revendications précédentes, **caractérisé en ce que** lorsque la différence de potentiel détectée dans la mesure c) est supérieure à un seuil de différence de potentiel prédéterminé et/ou lorsque le flux de courant détecté dans la mesure c) est inférieur à un seuil de flux de courant prédéterminé, il est déterminé dans la mesure d) que la tête de soudage (14) n'est pas dans la position de référence de contrôle du fonctionnement.

4. Procédé selon l'une des revendications précédentes, **caractérisée en ce que** lorsqu'il est déterminé dans la mesure d) que la tête de soudage (14) est dans la position de référence de contrôle du fonctionnement, un message d'autorisation d'opération est généré, et lorsqu'il est déterminé dans la mesure d) que la tête de soudage (14) n'est pas dans la position de référence de contrôle du fonctionnement, un message d'erreur est généré.

5. Procédé selon l'une des revendications précédentes, **caractérisé en ce que** le contrôle du fonctionnement est effectué avant le début d'un mode de fonctionnement et/ou après une période de temps prédéterminée dans un mode de fonctionnement d'un robot de soudage (10), et **en ce que**, lorsqu'il est déterminé dans la mesure d) que la tête de soudage (14) ne se trouve pas dans la position de référence de contrôle du fonctionnement, le démarrage du mode de fonctionnement ou la poursuite du mode de fonctionnement est empêché.
